# EUROPÄISCHE PATENTSCHRIFT

(11) **EP 2 531 799 B1**
(45) Veröffentlichungstag und Bekanntmachung des Hinweises auf die Patenterteilung: **23.10.2013**
(21) Anmeldenummer: 11709617.2
(22) Anmeldetag: 27.01.2011
(51) Int. Cl.: F28D 20/00, F28D 21/00

(54) **WÄRMETAUSCHER FÜR ABWASSER MIT PUFFERSPEICHERUNG**
HEAT EXCHANGER FOR WASTEWATER HAVING BUFFER STORAGE
ÉCHANGEUR DE CHALEUR POUR EAUX USÉES, ÉQUIPÉ D'UN STOCKAGE TAMPON

(30) Priorität: 02.02.2010 AT 1342010
(43) Veröffentlichungstag der Anmeldung: 12.12.2012
(73) Patentinhaber: Ennemoser, Johannes Paul, 8010 Graz (AT)
(72) Erfinder: Ennemoser, Johannes Paul, 8010 Graz (AT)
(74) Vertreter: Margotti, Herwig Franz
(86) Internationale Anmeldenummer: PCT/AT2011/000042
(87) Internationale Veröffentlichungsnummer: WO 2011/094777

(56) Entgegenhaltungen:
- EP-A1- 0 174 554
- EP-A2- 1 975 538
- ES-A1- 2 284 359

## Beschreibung

Die Erfindung betrifft einen Wärmetauscher für Abwasser mit Pufferspeicherung aus einem Behälter in dem sich das Abwasser, sowie ein Wärmetauscher befindet.

Wärmetauscher für Abwasser sind beispielsweise aus folgenden Druckschriften, die den allgemeinen Stand der Technik definieren, bekannt:
DE 197 56 283 A1 (SCHUELER) 18. Juni 1998 (19.06.1998) (Fig. 2; Spalte 4, Zeile 55 -Spalte 5, Zeile 19;)
DE 30 47 742 A1 (SCHIMONEK) 22. Juli 1982 (22.07.1982) (Fig. 1; Seite 11, Zeile 12 -Seite 12, Zeile 25;)
DE 21 26 568 A1 (OSTERTAG) 7. Dezember 1972 (07.12.1972) (Fig. 1; Seite 8, Zeilen 10 -17;)
DE 29 05 251 A1 (DEUBNER) 4. Oktober 1979 (04.10.1979) (Fig. 1; Seite 5, Zeilen 9 -14;)

Aus der ES 2 284 359 A1 und der EP 0 174 554 A1 sind Wärmetauscher gemäß dem Oberbegriff des Anspruchs 1 bekannt.

Ein Nachteil der hier angegebenen Erfindungen ist die relativ hohe Durchfließgeschwindigkeit des Abwassers durch diese Vorrichtungen, wodurch das Abwasser seine Restwärme sehr schnell abgeben muss.

Ein weiterer Nachteil ergibt sich aus den verwendeten Bauteilen, wie zum Beispiel Absperrventile, sowie einer Verminderung des Abflussrohrquerschnitts in der Konstruktion, wodurch Ablagerungen und somit hohe Wartungskosten entstehen können.

Der Erfindung liegt somit die Aufgabe Zugrunde, die Restwärme des stark verschmutzten Abwassers in einem Gebäude oder einer Industrieanlage nutzbar zu machen, das Abwasser während des Wärmeaustausches zu speichern, und die Verunreinigungen im Abwasser vollständig abzuleiten.

Die Behälter weisen eine relativ flache Bauform auf. Durch die flache Bauform wird eine vollständige Befüllung des Behälters erreicht, da das Verbindungsrohr oder der Verbindungsschlauch eine begrenzte Flexibilität haben.

Die Aufgabe wird dadurch gelöst, dass sich mehrere Behälter mit jeweiligem Verbindungsrohr oder Verbindungsschlauch und Hebevorrichtung übereinander befinden. Durch das Anbringen mehrerer übereinander liegender Behälter kann die Höhe des Wärmetauschers für Abwasser mit Pufferspeicherung vergrößert werden, wodurch sich eine kompaktere Bauweise ergibt.
Des weiteren wird verhindert, dass während der Entleerung des Behälters nachströmendes, warmes Abwasser ungenutzt in den Abwasserablauf abfließen kann, indem das Abwasser des oberen Behälters in den unteren Behälter geleitet wird.

Die Aufgabe wird dadurch gelöst, dass das Verbindungsrohr oder der Verbindungsschlauch aus einem flexiblen Material besteht.
Dadurch kann er angehoben oder abgesenkt werden.

Die Aufgabe wird dadurch gelöst, dass das Verbindungsrohr oder der Verbindungsschlauch mit einer Hebevorrichtung fest verbunden ist.
Wird das Verbindungsrohr oder der Verbindungsschlauch angehoben, kann der Behälter befüllt werden. Wird das Verbindungsrohr oder der Verbindungsschlauch abgesenkt, kann der Behälter entleert werden.

Die Aufgabe wird dadurch gelöst, dass das Verbindungsrohr oder der Verbindungsschlauch eine 180° Kurve macht.
Die dadurch entstehende Schleife kann sehr weit angehoben werden, wodurch die Höhe des Behälters vergrößert werden kann.

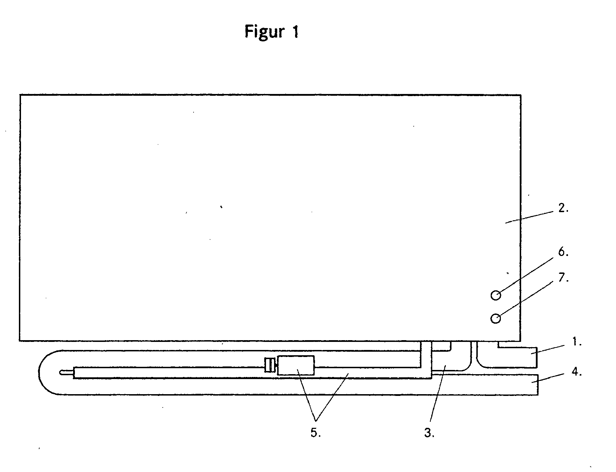

Die Figur 1 zeigt die Draufsicht des Wärmetauschers für Abwasser mit Pufferspeicherung.

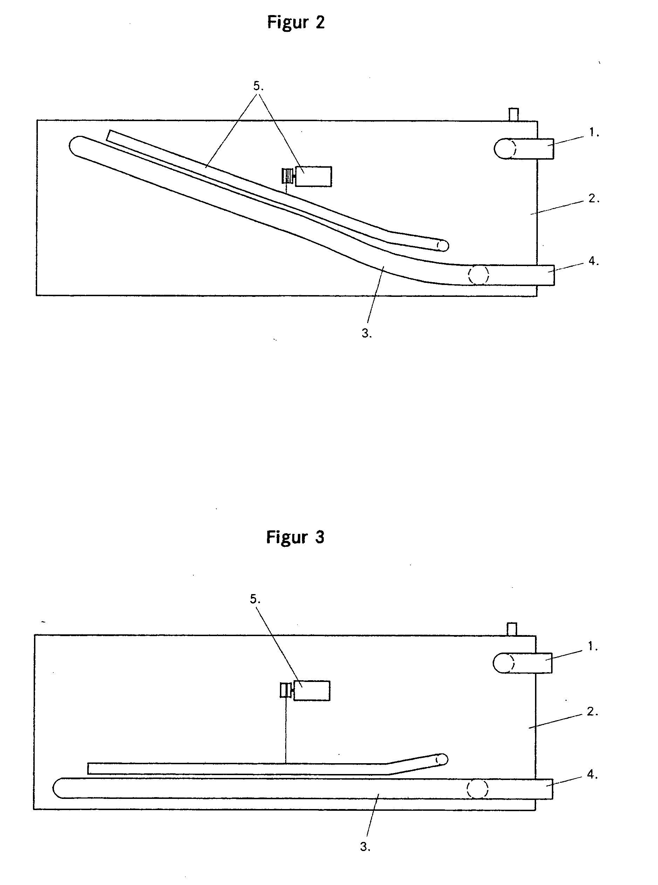

Die Figur 2 zeigt die Vorderansicht des Wärmetauschers für Abwasser mit Pufferspeicherung in der Befüllungsposition.

Die Figur 3 zeigt die Vorderansicht des Wärmetauschers für Abwasser mit Pufferspeicherung in der Entleerungsposition.

### Bezugszeichenliste:

1. Abwasserzulauf, 2. Behälter, 3. Verbindungsschlauch, 4. Abwasserablauf, 5. Hebevorrichtung mit Tragekonstruktion, 6. Wasserzulauf, 7. Wasserablauf;

Im Behälter 2 befindet sich der Wärmetauscher, sowie das vorübergehend gespeicherte Abwasser.
Das warme Abwasser gelangt über den Abwasserzulauf 1 in den Behälter 2. Nachdem der Behälter 2 vollständig befüllt ist, wird der flexible Verbindungsschlauch 3 mit Hilfe der Hebevorrichtung 5 abgesenkt, wodurch das gesammelte Abwasser in den Abwasserablauf 4 abfließen kann.
Um erneut Abwasser zu sammeln wird der Verbindungsschlauch 3 angehoben. Der flexible Verbindungsschlauch 3 beschreibt eine 180° Kurve, um eine möglichst hohe Bauweise des Behälters 2 zu ermöglichen.
Während der Entleerung des Behälters 2 kann nachströmendes, warmes Abwasser ungenutzt in den Abwasserablauf 4 abfließen. Es empfiehlt sich daher über dem ersten Behälter 2 einen weiteren Behälter mit Verbindungsschlauch und Hebevorrichtung anzubringen, der das gesammelte Abwasser in den darunter liegenden Behälter 2 ableitet.
Das zu erwärmende Wasser gelangt über den Wasserzulauf 6 in einen im Behälter 2 befindlichen Wärmetauscher und fließt erwärmt durch das wärmere Abwasser in den Wasserablauf 7.

## Patentansprüche

1. Wärmetauscher-Einrichtung für Abwasser mit Pufferspeicherung umfassend einen Behälter (2), in dem sich das vorübergehend gespeicherte Abwasser, sowie ein Wärmetauscher befindet, wobei der Behälter (2) eine flache Bauform aufweist, **dadurch gekennzeichnet, dass** mehrere Behälter (2) mit jeweiligem Verbindungsrohr oder Verbindungsschlauch (3) und Hebevorrichtung (5) übereinander angebracht sind.

2. Wärmetauscher-Einrichtung für Abwasser mit Pufferspeicherung nach Anspruch 1, **dadurch gekennzeichnet, dass** das Verbindungsrohr oder der Verbindungsschlauch (3) aus einem flexiblen Material besteht.

3. Wärmetauscher-Einrichtung für Abwasser mit Pufferspeicherung nach einem der Ansprüche 1 oder 2, **dadurch gekennzeichnet, dass** das Verbindungsrohr oder der Verbindungsschlauch (3) mit einer Hebevorrichtung (5) fest verbunden ist.

4. Wärmetauscher-Einrichtung für Abwasser mit Pufferspeicherung nach einem der Ansprüche 1 bis 3, **dadurch gekennzeichnet, dass** das Verbindungsrohr oder der Verbindungsschlauch (3) als Schleife ausgeführt werden.

## Claims

1. A heat exchanger facility for waste water with a buffer storage, comprising a container (2) in which the temporarily stored waste water as well as a heat exchanger are located, with the container (2) having a flat design, **characterized in that** several containers (2) with a respective connecting pipe or connecting tube (3) and a lifting device (5) are installed on top of each other.

2. A heat exchanger facility for waste water with a buffer storage according to claim 1, **characterized in that** the connecting pipe or the connecting tube (3) is made of a flexible material.

3. A heat exchanger facility for waste water with a buffer storage according to any of claims 1 or 2, **characterized in that** the connecting pipe or the connecting tube (3) is firmly connected to a lifting device (5).

4. A heat exchanger facility for waste water with a buffer storage according to any of claims 1 or 3, **characterized in that** the connecting pipe or the connecting tube (3) is designed as a loop.

## Revendications

1. Système échangeur de chaleur pour eaux usées avec accumulateur tampon, comprenant un récipient (2) dans lequel se trouvent les eaux usées provisoirement accumulées, ainsi qu'un échangeur de chaleur, dans lequel le récipient (2) présente une forme structurelle aplatie, **caractérisé en ce que** plusieurs récipients (2) sont montés les uns au-dessus les autres, avec un tube ou un tuyau de liaison (3) respectif et un dispositif de levage (5).

2. Système échangeur de chaleur pour eaux usées avec accumulateur tampon selon la revendication 1, **caractérisé en ce que** le tube ou le tuyau de liaison (3) est en un matériau flexible.

3. Système échangeur de chaleur pour eaux usées avec accumulateur tampon selon l'une des revendications 1 ou 2, **caractérisé en ce que** le tube ou le tuyau de liaison (3) est fermement relié à un dispositif de levage (5).

4. Système échangeur de chaleur pour eaux usées avec accumulateur tampon selon l'une des revendications 1 à 3, **caractérisé en ce que** le tube ou le tuyau de liaison (3) sont réalisés sous forme de boucle.
